# EUROPÄISCHE PATENTANMELDUNG

(11) **EP 4 393 625 A1**
(43) Veröffentlichungstag der Anmeldung: **03.07.2024**
(21) Anmeldenummer: 23218980.3
(22) Anmeldetag: 21.12.2023
(51) Int. Cl.: B23K 9/00, B23K 9/04, B23K 9/167, B23K 10/02, B23P 6/00, B60B 17/00, B23K 101/00

(54) **VERFAHREN ZUR BEARBEITUNG EINES RADS FÜR EIN SCHIENENFAHRZEUG**

(30) Priorität: 23.12.2022 AT 510012022
(71) Anmelder: Siemens Mobility Austria GmbH, 1210 Wien (AT)
(72) Erfinder: Boronkai, Laszlo, 8101 Gratkorn (AT); Mensing, Matthias, 12045 Berlin (DE); Rieger, Martin, 8311 Markt Hartmannsdorf (AT)
(74) Vertreter: Siemens Patent Attorneys

(57) **Zusammenfassung**

Die Erfindung bezieht sich auf ein Verfahren zur Bearbeitung eines Rads (1) für ein Schienenfahrzeug, wobei mittels eines Schweißvorgangs eine Oberfläche (8) des Rads (1), insbesondere eine Oberfläche (8) eines Radkranzes (9) des Rads (1), behandelt wird, wobei zumindest ein Lichtbogen zwischen der Oberfläche (8) und zumindest einer ersten Drahtelektrode (3) oder zumindest einer ersten bandförmigen Elektrode erzeugt wird.

Um günstige Verfahrensbedingungen zu schaffen, wird vorgeschlagen, dass in dem Schweißvorgang zumindest als die erste Drahtelektrode (3) ein Massivdraht oder zumindest als die erste bandförmige Elektrode ein massives Band eingesetzt wird und durch den Schweißvorgang zumindest ein metallisches erstes Material (11) in zumindest einem Abschnitt (13) der Oberfläche (8) oder an der gesamten Oberfläche (8) aufgetragen wird, wobei in dem Schweißvorgang eine Mehrzahl an Materialschichten aufgetragen wird.

Dadurch können Räderstandzeiten verlängert werden.

## Beschreibung

Die Erfindung betrifft ein Verfahren zur Bearbeitung eines Rads für ein Schienenfahrzeug, wobei mittels eines Schweißvorgangs eine Oberfläche des Rads, insbesondere eine Oberfläche eines Radkranzes des Rads, behandelt wird, wobei zumindest ein Lichtbogen zwischen der Oberfläche und zumindest einer ersten Drahtelektrode oder zumindest einer ersten bandförmigen Elektrode erzeugt wird.

Auf Räder von Schienenfahrzeugen wirken häufig hohe betriebliche Belastungen, welche zu hohen Beanspruchungen der Räder in kleinen Kontaktbereichen zwischen den Rädern und Schienen führen. Diese Beanspruchungen können zu einem Abtrag von Radmaterial und folglich zu Fehlstellen in den Kontaktbereichen führen.

Bei Erreichen definierter Laufleistungen der Räder und/oder bei einer Überschreitung einer Räder-Verschleißgrenze werden die Räder oft reprofiliert, wobei Laufprofile der Räder beispielsweise durch einen definierten Materialabtrag (z.B. mittels einer Drehbearbeitung auf einer Unterflurdrehbank) regeneriert werden. Um derartige Reprofilierungsvorgänge an den Rädern durchführen zu können, weisen die Räder häufig Verschleißreserven zwischen Laufkreisdurchmessern der Räder und Betriebsgrenzmaßen der Räder auf. Bei Erreichen dieser Betriebsgrenzmaße wird üblicherweise ein Räder- oder Radsatztausch durchgeführt.

Es sind auch Verfahren bekannt, bei welchen eine Schweißbearbeitung von Räderoberflächen vorgenommen wird, um beispielsweise eine Verschleißresistenz dieser Räderoberflächen zu bewirken.

Aus dem Stand der Technik ist beispielsweise die CN 115007966 A bekannt, in welcher ein Oberflächenschweißverfahren für Räder für Schienenfahrzeuge beschrieben ist. Vor einem Schweißvorgang muss ein zu schweißender Bereich eines Rads vorgewärmt werden. Der Schweißvorgang wird als Fülldrahtschweißvorgang durchgeführt, wobei ein nichtlegierter Fülldraht eingesetzt wird. Während des Schweißvorgangs werden Temperaturen einer Radoberfläche gemessen. Nach dem Schweißvorgang kühlt das Rad unter Einsatz einer thermischen Isolationsabdeckung ab.

Weiterhin zeigt die EP 3 147 070 A1 ein Verfahren zur Reprofilierung eines abgenutzten Rads, wobei ein Materialauftrag in einer Verschleißzone vorgenommen wird. Als Füllmaterial wird hierbei ein Metallpulver eingesetzt, welches in einer Mehrzahl an Schichten auf das Rad aufgebracht wird.

Darüber hinaus ist in der EP 3 695 933 A1 ein Verfahren zur Bearbeitung von Rädern für Schienenfahrzeuge beschrieben, wobei mittels eines Festköperschweißvorgangs, welcher als Rührreibauftragsschweißvorgang durchgeführt werden kann, eine Radscheibe beschichtet wird.

Der Erfindung liegt die Aufgabe zugrunde, ein einfach durchzuführendes Verfahren anzugeben, mit welchem hochwertige mechanische Eigenschaften eines Rads erzielt oder erhalten werden können.

Erfindungsgemäß wird diese Aufgabe gelöst mit einem Verfahren nach Anspruch 1, bei dem in dem Schweißvorgang zumindest als die erste Drahtelektrode ein Massivdraht oder zumindest als die erste bandförmige Elektrode ein massives Band eingesetzt wird und durch den Schweißvorgang zumindest ein metallisches erstes Material in zumindest einem Abschnitt der Oberfläche oder an der gesamten Oberfläche aufgetragen wird, wobei in dem Schweißvorgang eine Mehrzahl an Materialschichten aufgetragen wird.

Bei dem Schweißvorgang handelt es sich um einen Massivdrahtschweißvorgang oder um einen Massivbandschweißvorgang und beispielsweise nicht um einen Fülldrahtschweißvorgang. Ein Einsatz des Massivdrahts als die erste Drahtelektrode oder des massiven Bands als die erste bandförmige Elektrode bewirkt einen energieeffizienten Schweißvorgang, da eine für den Schweißvorgang einzustellende Stromstärke moderat gehalten werden kann. Ein Wärmeeintrag in das Rad ist durch den Massivdrahtschweißvorgang oder durch den Massivbandschweißvorgang gering und es wird ein übermäßiger Verzug in dem Rad vermieden.

Dadurch wird eine hohe Materialfestigkeit in einem mittels des erfindungsgemäßen Verfahrens geschweißten Bereichs des Rads erzielt und es werden große Festigkeitsunterschiede zwischen dem geschweißten Bereich und einem Grundkörper des Rads vermieden.

Durch das erfindungsgemäße Verfahren wird eine Standzeitverlängerung des Rads ermöglicht. Weiterhin kann eine Verschleißreserve des Rads reduziert werden, da mittels des erfindungsgemäßen Verfahrens eine lauftechnische und geometrische Konditionierung des Rads ermöglicht wird, bei welcher auf einen reprofilierenden Materialabtrag an dem Rad verzichtet werden kann. Durch Reduktion der Verschleißreserve wird eine Massenreduktion des Rads bewirkt, die mit einer Senkung von rotatorischen und ungefederten Massen eines Schienenfahrzeugs einhergehen kann, wenn das Rad mit dem Schienenfahrzeug verbunden ist. Dadurch kann beispielsweise ein Energieverbrauch des Schienenfahrzeugs gesenkt werden. Durch die Reduktion der Verschleißreserve kann es z.B. auch möglich sein, auf eine radverschleißbedingte Nachjustierung einer Federanordnung des Schienenfahrzeugs zu verzichten oder die Nachjustierung geringfügig zu halten.

Dadurch wird weiterhin ein additiver Fertigungsprozess realisiert. Es ist z.B. möglich, eine erste Materialschicht unmittelbar auf das Rad und eine zweite Materialschicht auf die erste Materialschicht aufzutragen. Die erste Materialschicht kann beispielsweise eine hohe Festigkeit aufweisen, die zweite Materialschicht eine hohe Härte oder eine hohe Verschleißresistenz.

Weitere vorteilhafte Ausgestaltungen des erfindungsgemäßen Verfahrens ergeben sich aus den Unteransprüchen.

Eine Vorzugslösung erhält man beispielsweise, wenn der Schweißvorgang als Plasmaschweißvorgang durchgeführt wird. Durch den Plasmaschweißvorgang werden eine präzise Wärmeeinbringung, eine hohe Lichtbogenstabilität, eine große Zündsicherheit, eine hohe Schweißgeschwindigkeit sowie ein geringer Materialverzug an dem Rad ermöglicht.

Eine Reaktivierung einer Zone des Rads mit besonderer Verschleißneigung wird erreicht, wenn mittels des Schweißvorgangs eine Lauffläche des Rads behandelt wird.

Im Zusammenhang mit einer Reaktivierung von Zonen des Rads mit besonderer Verschleißneigung kann es auch vorteilhaft sein, wenn mittels des Schweißvorgangs ein Spurkranz des Rads behandelt wird.

Eine Kompensation eines verschleißbedingten Materialabtrags wird ermöglicht, wenn mittels des Schweißvorgangs eine Kontur des Rads entsprechend einem Neuzustand des Rads erzeugt wird.

Günstig ist es, wenn der Schweißvorgang als Überkopfschweißvorgang durchgeführt wird.
Durch diese Maßnahme kann das erfindungsgemäße Verfahren beispielsweise in einer Wartungsgrube, über welcher das Rad angeordnet ist, durchgeführt werden. Beispielsweise kann für das erfindungsgemäße Verfahren eine Unterflurdrehbank eingesetzt sein, welche einen Adapter für ein Schweißwerkzeug aufweist, etc.

Es kann auch hilfreich sein, wenn in dem Schweißvorgang eine zweite Drahtelektrode, welche in einem anderen Drahtelektrodenmaterial ausgebildet ist als die erste Drahtelektrode, oder eine zweite bandförmige Elektrode, welche in einem anderen Bandmaterial ausgebildet ist als die erste bandförmige Elektrode, eingesetzt wird.

Durch diese Maßnahme kann eine Zweidrahtzuführung oder eine Zweibandzuführung erreicht werden, welche z.B. eine Ausbildung von gradierten Werkstoffen, d.h. von Werkstoffen, welche unterschiedliche Eigenschaften vereinen, in einer zu schweißenden Zone des Rads ermöglicht.

Eine hohe Dehngrenze und eine hohe Streckgrenze eines Schweißguts werden erreicht, wenn zumindest als die erste Drahtelektrode ein Massivdraht aus einem legierten ersten Massivdrahtmaterial oder zumindest als die erste bandförmige Elektrode ein massives Band aus einem legierten ersten Bandmaterial eingesetzt wird.

Im Zusammenhang mit einer hohen mechanischen Güte eines Schweißguts kann es vorteilhaft sein, wenn zumindest das legierte erste Massivdrahtmaterial oder zumindest das legierte erste Bandmaterial zumindest Kohlenstoff, Silizium, Mangan, Chrom und Molybdän enthält.

Eine energieeffiziente Bearbeitung des Rads wird ermöglicht, wenn der Schweißvorgang bei einer Ausgangstemperatur der Oberfläche von kleiner als 180 °C gestartet wird.

Es ist beispielsweise vorstellbar, dass der Schweißvorgang ohne einen Vorwärmvorgang des Rads gestartet wird.

Eine materialaufwandsarme Ausgestaltung des erfindungsgemäßen Verfahrens wird erreicht, wenn nach dem Schweißvorgang ein Abkühlvorgang des unverkleideten Rads abgewartet wird.

Auf eine thermische Isolierung des Rads (z.B. mittels einer Abdeckvorrichtung) nach dem Schweißvorgang wird bei dieser Ausgestaltung des erfindungsgemäßen Verfahrens verzichtet.

Eine rechtzeitige Erkennung von Schweißfehlern (z.B. von Rissen oder von Lunkern etc.) wird ermöglicht, wenn während des Schweißvorgangs oder nach dem Schweißvorgang eine akustische oder/und optische Qualitätsprüfung der Oberfläche durchgeführt wird.

Nachfolgend wird die Erfindung anhand von Ausführungsbeispielen näher erläutert.

Es zeigt beispielhaft:
- Fig. 1:: Ein Flussdiagramm zu einer beispielhaften Ausführungsvariante eines erfindungsgemäßen Verfahrens zur Auftragsschweißbearbeitung eines Rads für ein Schienenfahrzeug,
- Fig. 2:: Einen Seitenriss eines Ausschnitts aus einer beispielhaften ersten Ausführungsvariante eines Rads eines Schienenfahrzeugs mit einer schweißbearbeiteten Lauffläche und einem schweißbearbeiteten Spurkranz in geschnittener Darstellung, und
- Fig. 3:: Einen Seitenriss eines Ausschnitts aus einer beispielhaften zweiten Ausführungsvariante eines Rads eines Schienenfahrzeugs mit einem schweißbearbeiteten Spurkranz in geschnittener Darstellung.

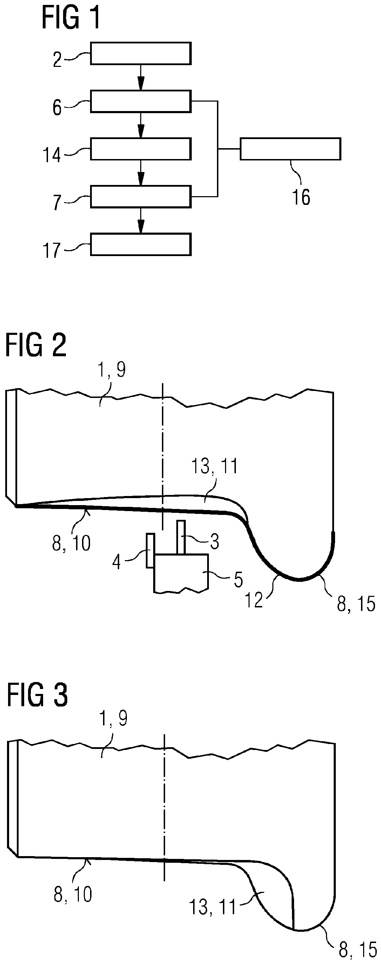

Fig. 1 zeigt ein Flussdiagramm zu einer beispielhaften Ausführungsvariante eines erfindungsgemäßen Verfahrens zur Auftragsschweißbearbeitung eines Rads 1 für ein Schienenfahrzeug, wie es beispielhaft in Fig. 2 und Fig. 3 dargestellt ist.

In einem ersten Zuführschritt 2 wird eine erste Drahtelektrode 3, wie sie beispielhaft in Fig. 2 gezeigt ist, von unten an das Rad 1 herangeführt. Die erste Drahtelektrode 3 ist unterhalb des Rads 1 in einer nicht dargestellten Wartungsgrube positioniert.

Ein Schweißvorgang an dem Rad 1 wird demnach als Überkopfschweißvorgang durchgeführt. Die erste Drahtelektrode 3 kann während des Schweißvorgangs z.B. unmittelbar unterhalb oder schräg unterhalb des Rads 1 etc. angeordnet sein.

Die erste Drahtelektrode 3 wird über eine nicht gezeigte Unterflurdrehbank angesteuert und ist über einen in Fig. 2 dargestellten Werkzeughalter 5 mit der Unterflurdrehbank verbunden. Als erste Drahtelektrode 3 wird ein erster Massivdraht aus einem legierten ersten Massivdrahtmaterial eingesetzt, welches 0,08 Gew.-% Kohlenstoff, 0,6 Gew.-% Silizium, 1,7 Gew.-% Mangan, 0,2 Gew.-% Chrom, 1,5 Gew.-% Nickel und 0,5 Gew.-% Molybdän enthält. Die erste Drahtelektrode 3 weist einen Durchmesser von 1,2 mm auf.

Vor einem Schweißvorgang (erster Schweißschritt 6 und zweiter Schweißschritt 7) wird das Rad 1 nicht vorgewärmt, der Schweißvorgang wird bei einer Ausgangstemperatur einer Oberfläche 8 eines Radkranzes 9 des Rads 1 von kleiner als 180 °C gestartet.

Mittels des ersten Schweißschritts 6 wird eine Lauffläche 10 des Radkranzes 9 als Teil der Oberfläche 8 des Radkranzes 9 behandelt, wobei ein Lichtbogen zwischen der Lauffläche 10 und der ersten Drahtelektrode 3 erzeugt wird. Der Schweißvorgang (d.h. der erste Schweißschritt 6 und der zweite Schweißschritt 7) wird als Plasmaschweißvorgang durchgeführt. Als Wärmequelle wird ein nicht gezeigter Plasmabrenner eingesetzt. Der Lichtbogen wird durch eine nicht gezeigte, wassergekühlte Plasmadüse begrenzt. Bei dem ersten Schweißschritt 6 wird zwischen der ersten Drahtelektrode 3 und der Plasmadüse ein Plasmagas, welches Argon enthält, geleitet. Ein eine Lichtbogenstrecke ionisierender Pilotlichtbogen brennt bei dem ersten Schweißschritt 6 zwischen der ersten Drahtelektrode 3 und der Plasmadüse.

Durch den ersten Schweißschritt 6 wird ein metallisches erstes Material 11, welches aus einem Grundwerkstoff des Rads 1 und dem ersten Massivdrahtmaterial gebildet wird, in einer verschlissenen Zone der Lauffläche 10, d.h. in einem Abschnitt 13 der Lauffläche 10, aufgetragen.

Nach dem ersten Schweißschritt 6 erfolgt ein automatisierter Werkzeugwechsel von der ersten Drahtelektrode 3 auf eine zweite Drahtelektrode 4, wie sie beispielhaft in Fig. 2 gezeigt ist und welche ebenfalls über den Werkzeughalter 5 mit der Unterflurdrehbank verbunden ist, aber in einem anderen Drahtelektrodenmaterial ausgebildet ist als die erste Drahtelektrode 3.

Die zweite Drahtelektrode 4 wird in einem zweiten Zuführschritt 14 an das Rad 1 herangeführt.

Mit der zweiten Drahtelektrode 4 wird, als Plasmaschweißschritt, der zweite Schweißschritt 7 durchgeführt.

Als zweite Drahtelektrode 4 wird ein zweiter Massivdraht aus einem legierten zweiten Massivdrahtmaterial eingesetzt, welches 0,09 Gew.-% Kohlenstoff, 0,4 Gew.-% Silizium, 1,7 Gew.-% Mangan, 0,35 Gew.-% Chrom, 2 Gew.-% Nickel und 0,6 Gew.-% Molybdän enthält. Die zweite Drahtelektrode 4 weist einen Durchmesser von 1,2 mm auf.

Bei dem zweiten Schweißschritt 7 wird das Plasmagas zwischen der zweiten Drahtelektrode 4 und der Plasmadüse geleitet. Der Pilotlichtbogen brennt bei dem zweiten Schweißschritt 7 zwischen der zweiten Drahtelektrode 4 und der Plasmadüse.

Durch den zweiten Schweißschritt 7 wird ein metallisches zweites Material 12, welches aus dem Grundwerkstoff des Rads 1, dem ersten Material 11 und dem zweiten Massivdrahtmaterial gebildet wird, an der aus der Lauffläche 10 und einem Spurkranz 15 des Radkranzes 9 gebildeten, gesamten Oberfläche 8 aufgetragen.

In dem Schweißvorgang wird somit eine Mehrzahl an Materialschichten aufgetragen. Es wird eine erste Materialschicht mit dem ersten Material 11 als Grundschicht und eine zweite Materialschicht mit dem zweiten Material 12 als Deckschicht auf das Rad 1 aufgetragen, wobei die erste Materialschicht gute Zähigkeitseigenschaften und die zweite Materialschicht eine hohe Härte und Verschleißresistenz aufweist. In dem Schweißvorgang verschmelzen das erste Material 11 und das zweite Material 12 teilweise miteinander. Mittels des Schweißvorgangs wird eine geometrische Kontur des Rads 1 entsprechend einem Neuzustand des Rads 1 erzeugt.

Erfindungsgemäß ist es auch möglich, die erste Drahtelektrode 3 und die zweite Drahtelektrode 4 gleichzeitig an dem Rad 1 einzusetzen, wobei ein erster Lichtbogen und ein zweiter Lichtbogen erzeugt werden (z.B. unter Einsatz eines ersten Plasmabrenners und eines zweiten Plasmabrenners) und wobei die erste Drahtelektrode 3 und die zweite Drahtelektrode 4 in gleichen oder unterschiedlichen Drahtelektrodenmaterialien ausgeführt sein können.

Erfindungsgemäß ist es weiterhin denkbar, statt des ersten Massivdrahtmaterials oder des zweiten Massivdrahtmaterials andere, alternative Massivdrahtmaterialien einzusetzen. Beispielsweise kann als erste Alternative ein Massivdrahtmaterial, welches 0,1 Gew.-% Kohlenstoff, 0,6 Gew.-% Silizium, 1 Gew.-% Mangan, 2,5 Gew.-% Chrom und 1 Gew.-% Molybdän enthält oder als zweite Alternative ein Massivdrahtmaterial, welches 0,01 Gew.-% Kohlenstoff, 0,65 Gew.-% Silizium, 0,7 Gew.-% Mangan, 12,2 Gew.-% Chrom, 4,8 Gew.-% Nickel und 0,5 Gew.-% Molybdän enthält, eingesetzt werden.

Ferner ist es möglich, dass beispielsweise das erste Massivdrahtmaterial unlegiert ist und das zweite Massivdrahtmaterial legiert ist etc.

Erfindungsgemäß ist es darüber hinaus vorstellbar, dass beispielsweise anstatt der ersten Drahtelektrode 3 und der zweiten Drahtelektrode 4 eine erste bandförmige Elektrode und eine zweite bandförmige Elektrode aus massiven Bändern eingesetzt wird. Für die erste bandförmige Elektrode kann z.B. ein legiertes erstes Bandmaterial eingesetzt werden, für die zweite bandförmige Elektrode z.B. ein anderes, legiertes zweites Bandmaterial. Das erste Bandmaterial und das zweite Bandmaterial können beispielsweise jene im Zusammenhang mit dem ersten Massivdrahtmaterial und dem zweiten Massivdrahtmaterial beschriebenen Bestandteile enthalten. Mit der ersten bandförmigen Elektrode und der zweiten bandförmigen Elektrode kann ein Bandschweißvorgang durchgeführt werden, für welchen eine Mehrzahl an Bandschweißlichtbögen eingesetzt sein kann. Die erste bandförmige Elektrode und die zweite bandförmige Elektrode können beispielsweise geometrisch an eine Kontur des Radkranzes 9 angepasst sein.

Während des Schweißvorgangs wird eine akustische und optische Qualitätsprüfung der bearbeiteten Oberfläche 8 durchgeführt (Prüfschritt 16). Dabei werden die erste Materialschicht und die zweite Materialschicht auf Schweißfehler (z.B. Risse und Lunker etc.) geprüft. Eine nicht gezeigte Prüfvorrichtung mit einem Richtmikrofon, welches ein im Hinblick auf Schweißfehler indizierende Geräusche auszuwertendes Geräuschverhalten des Plasmabrenners erfasst, und mit einer Kamera ist mit der Unterflurdrehbank verbunden. Erfindungsgemäß ist es auch denkbar, die Qualitätsprüfung erst nach dem Schweißvorgang vorzunehmen (beispielsweise durch eine akustische oder/und optische Kontrolle des Rads 1).

Nach dem Schweißvorgang wird ein Abkühlvorgang des unverkleideten Rads 1 abgewartet, in welchem das Rad 1 auf eine Temperatur, welche ungefähr einer Umgebungstemperatur entspricht, abkühlt (Abkühlschritt 17). Das Rad 1 ist während des Abkühlschritts 17 unverkleidet, d.h. nicht mit einer thermisch isolierenden Abdeckung etc. ummantelt.

In Fig. 2 ist ein Seitenriss eines Ausschnitts aus einer beispielhaften ersten Ausführungsvariante eines Rads 1 eines Schienenfahrzeugs mit einer schweißbearbeiteten Oberfläche 8, welche eine Lauffläche 10 eines Radkranzes 9 des Rads 1 und einen Spurkranz 15 des Radkranzes 9 umfasst, in geschnittener Darstellung gezeigt.

Das Rad 1 ist mittels eines Verfahrens, wie es beispielhaft im Zusammenhang mit Fig. 1 beschrieben ist, bearbeitet. Als Schweißwerkzeug fungieren eine erste Drahtelektrode 3 und eine zweite Drahtelektrode 4, welche mit einem Werkzeughalter 5 verbunden sind. Der Werkzeughalter 5 ist wiederum mit einer nicht dargestellten Unterflurdrehbank gekoppelt. Der Werkzeughalter 5 ist unterhalb des Rads 1 angeordnet. Schweißvorgänge mittels des genannten Verfahrens werden als Überkopfschweißvorgänge durchgeführt.

In einem abgenutztem Abschnitt 13 der Lauffläche 10 ist mittels des Verfahrens ein metallisches erstes Material 11 als erste Materialschicht aufgetragen. Zum Auftrag des ersten Materials 11 wird die erste Drahtelektrode 3 eingesetzt.

Auf der gesamten Lauffläche 10, das erste Material 11 überlagernd, sowie auf dem Spurkranz 15 ist ein metallisches zweites Material 12 aufgetragen. Zum Auftrag des zweiten Materials 12 wird die zweite Drahtelektrode 4, welche in einem anderen Drahtelektrodenmaterial als die erste Drahtelektrode 3 ausgeführt ist, eingesetzt.

Das Rad 1 weist in jenem Bereich, in welchem das Rad 1 mittels des genannten Verfahrens bearbeitet ist, d.h. im Bereich der schweißbearbeiteten Oberfläche 8, eine Dehngrenze von 820 MPa und eine Brinellhärte von 360 HB auf.

Fig. 3 zeigt einen Seitenriss eines Ausschnitts aus einer beispielhaften zweiten Ausführungsvariante eines Rads 1 eines Schienenfahrzeugs in geschnittener Darstellung.

Diese beispielhafte zweite Ausführungsvariante eines Rads 1 ähnelt jener beispielhaften ersten Ausführungsvariante eines Rads 1, wie sie in Fig. 2 dargestellt ist.

Es werden daher in Fig. 3 teilweise gleiche Bezugszeichen wie in Fig. 2 verwendet.

Im Unterschied zu Fig. 2 ist eine Oberfläche 8 des Rads 1 gemäß Fig. 3 nur im Bereich eines Spurkranzes 15 eines Radkranzes 9 des Rads 1 schweißbearbeitet.

In einem abgenutztem Abschnitt 13 des Spurkranzes 15 ist mittels eines Plasma-Auftragsschweißvorgangs, wie er im Zusammenhang mit Fig. 1 beschrieben ist, ein metallisches erstes Material 11 in zwei Materialschichten aufgetragen.

### Liste der Bezeichnungen

- 1: Rad
- 2: Erster Zuführschritt
- 3: Erste Drahtelektrode
- 4: Zweite Drahtelektrode
- 5: Werkzeughalter
- 6: Erster Schweißschritt
- 7: Zweiter Schweißschritt
- 8: Oberfläche
- 9: Radkranz
- 10: Lauffläche
- 11: Erstes Material
- 12: Zweites Material
- 13: Abschnitt
- 14: Zweiter Zuführschritt
- 15: Spurkranz
- 16: Prüfschritt
- 17: Abkühlschritt

## Patentansprüche

1. Verfahren zur Bearbeitung eines Rads (1) für ein Schienenfahrzeug, wobei mittels eines Schweißvorgangs eine Oberfläche (8) des Rads (1), insbesondere eine Oberfläche (8) eines Radkranzes (9) des Rads (1), behandelt wird, wobei zumindest ein Lichtbogen zwischen der Oberfläche (8) und zumindest einer ersten Drahtelektrode (3) oder zumindest einer ersten bandförmigen Elektrode erzeugt wird, **dadurch gekennzeichnet, dass** in dem Schweißvorgang zumindest als die erste Drahtelektrode (3) ein Massivdraht oder zumindest als die erste bandförmige Elektrode ein massives Band eingesetzt wird und durch den Schweißvorgang zumindest ein metallisches erstes Material (11) in zumindest einem Abschnitt (13) der Oberfläche (8) oder an der gesamten Oberfläche (8) aufgetragen wird, wobei in dem Schweißvorgang eine Mehrzahl an Materialschichten aufgetragen wird.

2. Verfahren nach Anspruch 1, **dadurch gekennzeichnet, dass** der Schweißvorgang als Plasmaschweißvorgang durchgeführt wird.

3. Verfahren nach Anspruch 1 oder 2, **dadurch gekennzeichnet, dass** mittels des Schweißvorgangs eine Lauffläche (10) des Rads (1) behandelt wird.

4. Verfahren nach einem der Ansprüche 1 bis 3, **dadurch gekennzeichnet, dass** mittels des Schweißvorgangs ein Spurkranz (15) des Rads (1) behandelt wird.

5. Verfahren nach einem der Ansprüche 1 bis 4, **dadurch gekennzeichnet, dass** mittels des Schweißvorgangs eine Kontur des Rads (1) entsprechend einem Neuzustand des Rads (1) erzeugt wird.

6. Verfahren nach einem der Ansprüche 1 bis 5, **dadurch gekennzeichnet, dass** der Schweißvorgang als Überkopfschweißvorgang durchgeführt wird.

7. Verfahren nach einem der Ansprüche 1 bis 6, **dadurch gekennzeichnet, dass** in dem Schweißvorgang eine zweite Drahtelektrode (4), welche in einem anderen Drahtelektrodenmaterial ausgebildet ist als die erste Drahtelektrode (3), oder eine zweite bandförmige Elektrode, welche in einem anderen Bandmaterial ausgebildet ist als die erste bandförmige Elektrode, eingesetzt wird.

8. Verfahren nach einem der Ansprüche 1 bis 7, **dadurch gekennzeichnet, dass** zumindest als die erste Drahtelektrode (3) ein Massivdraht aus einem legierten ersten Massivdrahtmaterial oder zumindest als die erste bandförmige Elektrode ein massives Band aus einem legierten ersten Bandmaterial eingesetzt wird.

9. Verfahren nach Anspruch 8, **dadurch gekennzeichnet, dass** zumindest das legierte erste Massivdrahtmaterial oder zumindest das legierte erste Bandmaterial zumindest Kohlenstoff, Silizium, Mangan, Chrom und Molybdän enthält.

10. Verfahren nach Anspruch 9, **dadurch gekennzeichnet, dass** zumindest das legierte erste Massivdrahtmaterial oder zumindest das legierte erste Bandmaterial 0,08 Gew.-% Kohlenstoff, 0,6 Gew.-% Silizium, 1,7 Gew.-% Mangan, 0,2 Gew.-% Chrom, 1,5 Gew.-% Nickel und 0,5 Gew.-% Molybdän enthält.

11. Verfahren nach Anspruch 9, **dadurch gekennzeichnet, dass** zumindest das legierte erste Massivdrahtmaterial oder zumindest das legierte erste Bandmaterial 0,1 Gew.-% Kohlenstoff, 0,6 Gew.-% Silizium, 1 Gew.-% Mangan, 2,5 Gew.-% Chrom und 1 Gew.-% Molybdän enthält.

12. Verfahren nach einem der Ansprüche 7 bis 11, **dadurch gekennzeichnet, dass** die zweite Drahtelektrode (4) in einem legierten zweiten Massivdrahtmaterial oder die zweite bandförmige Elektrode in einem legierten zweiten Bandmaterial ausgeführt ist, wobei das legierte zweite Massivdrahtmaterial oder das legierte zweite Bandmaterial 0,09 Gew.-% Kohlenstoff, 0,4 Gew.-% Silizium, 1,7 Gew.-% Mangan, 0,35 Gew.-% Chrom, 2 Gew.-% Nickel und 0,6 Gew.-% Molybdän enthält.

13. Verfahren nach einem der Ansprüche 1 bis 12, **dadurch gekennzeichnet, dass** der Schweißvorgang bei einer Ausgangstemperatur der Oberfläche (8) von kleiner als 180 °C gestartet wird.

14. Verfahren nach einem der Ansprüche 1 bis 13, **dadurch gekennzeichnet, dass** nach dem Schweißvorgang ein Abkühlvorgang des unverkleideten Rads (1) abgewartet wird.

15. Verfahren nach einem der Ansprüche 1 bis 14, **dadurch gekennzeichnet, dass** während des Schweißvorgangs oder nach dem Schweißvorgang eine akustische oder/und optische Qualitätsprüfung der Oberfläche (8) durchgeführt wird.
